# EUROPEAN PATENT APPLICATION

(11) **EP 4 389 693 A1**
(43) Date of publication of application: **26.06.2024**
(21) Application number: 22216608.4
(22) Date of filing: 23.12.2022
(51) Int. Cl.: C01B 3/04

(54) **PROCESS FOR PRODUCING SYNTHESIS GAS PRODUCT COMPRISING HYDROGEN**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: ULBER, Dieter, 60439 Frankfurt / Main (DE); LUTZ, Michael, 60439 Frankfurt am Main (DE); COSCIA, Antonio, 60439 Frankfurt am Main (DE)
(74) Representative: Air Liquide

(57) **Abstract**

A process for producing a synthesis gas product comprising hydrogen from an endothermic cracking reaction of an ammonia feedstock stream, comprising the following steps:
- Providing an ammonia feedstock stream,
- Performing a catalytic conversion by catalytically converting the ammonia feedstock stream by cracking endothermically said ammonia feedstock stream into a synthesis gas product comprising hydrogen,
- Performing heat exchanges step by performing heat exchanges between the synthesis gas product and the catalytic conversion of the ammonia feedstock stream, said heat exchanges step comprising the following steps:
∘ Discharging the synthesis gas product in a synthesis gas product circulation duct, said duct being arranged for the heat exchanges between the discharged synthesis gas product and the catalytic conversion of the ammonia feedstock stream,
∘ Recovering heat from the discharged synthesis gas product,
∘ Directing the recovered heat to the catalytic conversion of the ammonia feedstock stream.

## Description

The field of the present invention is that of process for producing a synthesis gas product. The invention relates particularly to a process for producing a synthesis gas product comprising hydrogen. The invention also relates to a reactor for producing a synthesis gas product comprising hydrogen from an ammonia feedstock stream. The invention also relates to the use of such reactor for ammonia cracking.

The production of a synthesis gas product comprising hydrogen by an endothermic cracking reaction of an ammonia feedstock stream can be done in a catalytic unit at elevated temperatures, generally from 400°C to 800°C. Such a unit typically comprises a metallic shell, a catalyst and an external heat source. To achieve a lowest possible CO2 footprint for the cracking process, the external heat source is provided only by a combustion of an ammonia fuel stream in a furnace. The process requires a high quantity of heat and energy. The disadvantage of such process is that it requires a lot of fuel for providing a high energy level to the cracking reaction.

The invention proposes a process for producing a synthesis gas product comprising hydrogen from an ammonia feedstock in which the required external energy is significantly reduced.

For this purpose, the invention proposes a process for producing a synthesis gas product comprising hydrogen from an endothermic cracking reaction of an ammonia feedstock stream, comprising the following steps:
- Providing an ammonia feedstock stream,
- Performing a catalytic conversion by catalytically converting the ammonia feedstock stream by cracking endothermically said ammonia feedstock stream into a synthesis gas product comprising hydrogen,
- Performing a heat exchanges step by performing heat exchanges between the synthesis gas product and the catalytic conversion of the ammonia feedstock stream, said heat exchanges step comprising the following steps:
   ∘ Discharging the synthesis gas product in a synthesis gas product circulation duct, said duct being arranged for the heat exchanges between the discharged synthesis gas product and the catalytic conversion of the ammonia feedstock stream,
   ∘ Recovering heat from the discharged synthesis gas product,
   ∘ Directing the recovered heat to the catalytic conversion of the ammonia feedstock stream.

According to one aspect of the invention, the steps disclosed previously are performed in a reactor configured to produce the synthesis gas product comprising hydrogen.

According to one aspect of the invention, the process comprises a conditioning step of the ammonia feedstock stream, said conditioning step following the ammonia feedstock stream providing step.

According to one aspect of the invention, the catalytic conversion converts the ammonia feedstock stream conditioned in the conditioning step into a synthesis gas product comprising hydrogen.

According to one aspect of the invention, the synthesis gas product comprises hydrogen, nitrogen and an unconverted portion of ammonia. In other words, the synthesis gas product comprises hydrogen, nitrogen and an unconverted portion of the ammonia feedstock stream not being converted by the catalytic conversion of ammonia feedstock.

According to one aspect of the invention, the process comprises a step of releasing the synthesis gas product from the reactor.

According to one aspect of the invention, the process comprises a step of processing the synthesis gas product following the step of releasing said synthesis gas product. The processing step can be for example a purification step.

According to one aspect of the invention, the step of processing is a purification step following the releasing step, said purification step using a method such as Pressure Swing Adsorption (acronym PSA), cryogenic separation, membranes, Temperature Swing Adsorption (acronym TSA).

According to one aspect of the invention, the ammonia conditioning step is subjected to vaporization, preheating and/or superheating.

According to one aspect of the invention, the heat for vaporization, preheating and/or superheating during the ammonia conditioning step is provided by an external heat source, such as an external firing due to a combustion reaction.

According to one aspect of the invention, the catalytic conversion is performed at a temperature comprised between 600°C and 900°C, preferably between 700°C and 800°C.

As an alternative, the catalytic conversion is performed at a temperature comprised between 300°C and 600°C, preferably between 400°C and 500°C.

According to one aspect of the invention, the catalytic conversion is performed at a pressure of around 25 barA.

According to one aspect of the invention, the catalytic conversion is performed in presence of a catalyst that promotes the catalytic conversion.

According to one aspect of the invention, the catalytic conversion is at least partially heated by an external heat source, for example heat from an external firing due to a combustion reaction.

According to one aspect of the invention, the combustion reaction is a reaction between a fuel gas, for example ammonia, and combustion air.

According to one aspect of the invention, during the heat exchanges step, the discharged synthesis gas product circulates through the synthesis gas product circulation duct which is comprised in a heat exchanger arranged inside the reaction chamber. Thus, the discharged synthesis gas product exchanges heat with the catalytic conversion when it circulates in the synthesis gas product duct.

The invention is also directed to a reactor for producing a synthesis gas product comprising hydrogen from an ammonia feedstock stream, the reactor comprising:
- An outer shell tube, comprising a reaction chamber, said reaction chamber being configured to be heated,
- An active catalyst layer arranged in the reaction chamber,
- An entry for the ammonia feedstock stream arranged in the reaction chamber, the entry for the ammonia feedstock stream being in fluid connection with the catalyst layer,
- At least one heat exchanger arranged in a heat exchange relationship with the reaction chamber.

According to one aspect of the invention, the heat exchanger is arranged inside the reaction chamber, wherein the reactor is configured to, after entry of the ammonia feedstock stream into the reaction chamber, make the ammonia feedstock stream flow through the catalyst layer for a catalytic conversion of at least part of the ammonia feedstock stream into a synthesis gas product in the catalyst layer, and make the synthesis gas product flow through the heat exchanger, said heat exchanger being arranged inside the reaction chamber to be in a heat exchange relationship with the catalyst layer and the ammonia feedstock stream. In other words, the reactor comprises a set of volumes to make the ammonia feedstock stream circulate through the catalyst layer and make the synthesis gas product flow through the heat exchanger.

In one aspect of the invention, the reactor is configured to make the ammonia feedstock stream circulate through the catalyst layer and make the synthesis gas product flow through the heat exchanger in countercurrent to the circulation through the catalyst layer.

According to one aspect of the invention, the outer shell tube comprises a tube entry for the ammonia feedstock stream and the entry for the ammonia feedstock stream is configured to let the ammonia feedstock stream enter in the outer shell tube .

According to one aspect of the invention, the outer shell tube comprises an outlet for the synthesis gas product, said outlet being configured to release the synthesis gas product from the reactor.

According to one aspect of the invention, the heat exchanger comprises at least one synthesis gas product circulation duct arranged for discharging the synthesis gas product, said synthesis gas product circulation duct comprising a wall arranged for heat exchanges between the discharged synthesis gas product and the reaction chamber.

According to one aspect of the invention, the synthesis gas product circulation duct is arranged for the heat exchanges between the discharged synthesis gas product and the catalyst layer.

According to one aspect of the invention, the heat exchanger comprises at least one inlet, configured to provide the synthesis gas product into said heat exchanger after the catalytic conversion of the ammonia feedstock stream.

According to one aspect of the invention, the heat exchanger comprises at least one outlet, said outlet being configured to discharge the synthesis gas product from the heat exchanger.

According to one aspect of the invention, the synthesis gas product duct is a heat exchange coil.

According to one aspect of the invention, the heat exchanger comprises two synthesis gas product circulation ducts as previously described.

According to one aspect of the invention, the heat exchanger comprises two heat exchange coils, said exchange coils being interlaced.

According to one aspect of the invention, the outer shell tube is divided into a reaction chamber and an exit chamber by means of a separating tray. It is thus possible to set a different, preferably lower, pressure in the exit chamber than in the reaction chamber. In one aspect of the invention, the exit chamber is configured to receive the synthesis gas product after its circulation in the heat exchanger. In other words, the exit chamber is configured to receive the synthesis gas product before the releasing step.

According to one aspect of the invention, the outer shell tube is configured to be fluidically connected to a collection chamber for the synthesis gas product, said collection chamber being in fluid connection with the exit chamber of the outer shell tube. In one aspect of the invention, the collection chamber is configured to receive the synthesis gas product and release said synthesis gas product.

According to one aspect of the invention, the heat exchanger is arranged inside the catalyst layer.

According to one aspect of the invention, the catalyst layer is a catalyst bed.

According to one aspect of the invention, the catalyst layer is a dumped catalyst bed of solid catalyst.

According to one aspect of the invention, the catalyst layer is a structured catalyst. A structured catalyst here can be disclosed as a catalyst which is coated on a structure, in particular a non-porous structure, for example on the inner wall of the shell tube.

According to one aspect of the invention, the catalyst is configured to promote the catalytic conversion at a temperature comprised between 600°C and 900°C, preferably between 700°C and 800°C.

As alternative, the catalyst is configured to promote the catalytic conversion at a temperature comprised between is performed at a temperature comprised between 300°C and 600°C, preferably between 400°C and 500°C.

According to one aspect of the invention, the catalyst comprises at least one component chosen among nickel, ruthenium, cobalt, cobalt-molybdenum or iron as a catalytically active material, in particular nickel as a catalytically active material on a carrier, for example an aluminum oxide (Al2O3) carrier.

According to one aspect of the invention, the heat exchanger is made of stainless steels comprising nickel such as alloy 600, alloy 625, steel coated with nickel, aluminum coated with nickel or another catalytic material comprising nickel. Such material is able to foster the ammonia conversion into hydrogen and nitrogen, and to avoid nitridation.

According to one aspect of the invention, the inner wall of the shell tube is configured to be protected against nitridation.

According to one aspect of the invention, the inner wall of the shell is centrifugally cast.

According to one aspect of the invention, the inner wall of the shell tube is a micro-alloyed wall.

According to one aspect of the invention, the inner wall of the shell tube comprises a material chosen among G4852, micro-R, HT_E, the inner wall of the shell tube being optionally aluminized or coated with a weld-overlay.

According to one aspect of the invention, the inner wall of the shell tube does not comprise a corrosion protection layer. In this invention, there is no metal dusting issue leading to corrosion.

According to one aspect of the invention, the reaction chamber is configured to be externally heated. The external heat can be provided by a firing process, such as a combustion reaction.

According to one aspect of the invention, the heat exchanger is configured to recover heat from the catalytic conversion in the reaction chamber and direct the recovered heat to the reaction chamber, in particular to the catalyst layer.

The invention also relates to the use of a reactor for producing a synthesis gas comprising hydrogen from an ammonia feedstock stream as disclosed above in an endothermic reaction of ammonia cracking.

The invention also relates to a furnace for cracking ammonia comprising at least one reactor as disclosed above, and at least one heating device for heating the reactor.

According to one aspect of the invention, the furnace comprises a plurality of reactors and/or a plurality of heating device as disclosed previously.

According to one aspect of the invention, the reactors are fluidically arranged in parallel to each other.

Further features, details and advantages of the invention will become more clearly apparent from reading the description given below by way of indication with reference to the drawings, in which:
[FIG. 1] is a schematic representation of the process of the present invention,
[Fig. 2] is a schematic view of the reactor according a first embodiment of the invention,
[Fig. 3] is a schematic view of the reactor according a second embodiment of the invention,
[Fig. 4] is a schematic view of a furnace comprising reactors of figure 2 or 3.

It should first of all be noted that the figures disclose the invention in a detailed manner so as to implement the invention, and said figures may of course serve to define the invention more clearly, where necessary.

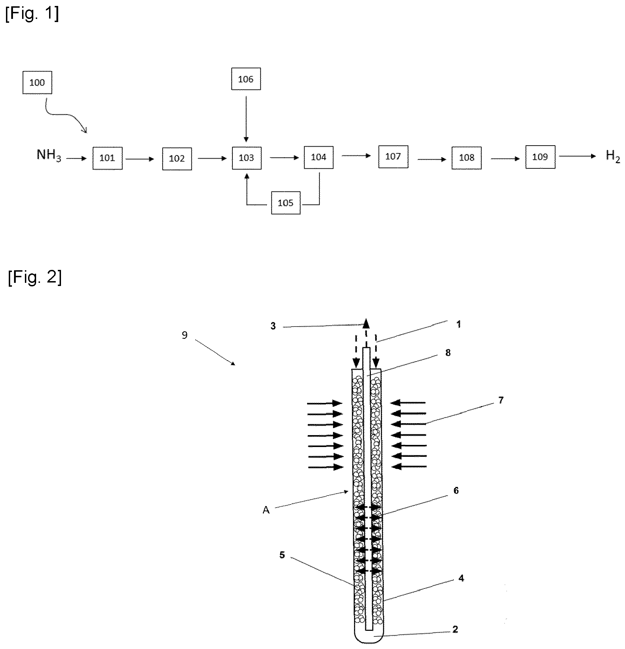

Figure 1 shows a process 100 for producing synthesis gas product comprising hydrogen from an ammonia feedstock stream comprising the following steps:
- Providing an ammonia feedstock stream 101,
- Conditioning said ammonia feedstock stream 102,
- Performing a catalytic conversion by catalytically converting the ammonia feedstock stream by cracking endothermically said ammonia feedstock stream into a synthesis gas product comprising hydrogen 103,
- Performing a heat exchanges step by performing heat exchanges between the synthesis gas product and the catalytic conversion of the ammonia feedstock stream, said heat exchanges step comprising the following steps:
   ∘ Discharging 109 the synthesis gas product in a synthesis gas product circulation duct, said duct being arranged for the heat exchanges between the discharged synthesis gas product and the catalytic conversion of the ammonia feedstock stream,
   ∘ Recovering heat from the discharged synthesis gas product 104,
   ∘ Directing the recovered heat 105 to the catalytic conversion of the ammonia feedstock stream.
- Externally heating the catalytic conversion 106,
- Releasing the synthesis gas product 107 from the reactor,
- Processing the synthesis gas product reactor.

The steps 101, 103, 104, 105 are performed in a reactor configured to produce a synthesis gas product comprising hydrogen.

Here, the conditioning step 102 is for example, but not limited to, the vaporization of the ammonia feedstock stream.

The catalytic conversion step 103 of the ammonia feedstock stream is here performed at a temperature comprised between 600°C and 900°C, preferably between 700°C and 800°C.

This catalytic conversion is a cracking reaction of the ammonia feedstock stream, which is an endothermic reaction requiring heat. The catalytic conversion is performed in presence of an active catalyst which promotes the conversion of the ammonia feedstock during the cracking reaction when heat is provided to said catalytic conversion.

The process comprises a step of external heating 106 of the catalytic conversion. This external heating may come from an external firing. Here "external" means that the external heat is not provided from the reactor. This external heating is realized by a combustion of a fuel gas, comprising for example ammonia, and a combustion air. Heat is transferred from this combustion to the catalytic conversion by convection, conduction and radiation. However, the external heating may come from Joule heating by an electrical heating device.

Following the catalytic conversion, the synthesis gas product comprises hydrogen, nitrogen and a portion of unconverted ammonia feedstock. The synthesis gas product is hot due to the heat provided to the catalytic conversion.

The process comprises recovering heat from said discharged synthesis gas product 104. This step is an internal heat recovering step. The process comprises then a directing step 105 of the recovered heat from the synthesis gas product. During this step, the discharged synthesis gas product circulates in heat exchange relationship with the catalytic conversion of the ammonia feedstock stream to transfer heat of said discharged synthesis gas product to the catalytic conversion, in particular to the catalyst. Thanks to these two steps, the external heating can be reduced and consequently, the quantity of required flue gas can be reduced.

The process comprises a releasing step 107 of the synthesis gas product. During this step, the synthesis gas product is released from the reactor in which the catalytic conversion occurs to be treated in a processing step 108 if needed. For example, this processing step can be a purification step. This purification step uses classical purification methods, such as PSA, cryogenic separation, membranes, TSA. Purified hydrogen is thus obtained.

Figure 2 is a schematic representation of a reactor for producing a synthesis gas comprising hydrogen from an ammonia feedstock stream according to a first embodiment.

In this embodiment, the reactor 9 comprises an outer shell tube 4, said outer shell tube 4 being pressurized. The outer shell tube 4 comprises a reaction chamber A in which a catalytic conversion of the ammonia feedstock stream is realized, said catalytic conversion being a cracking reaction.

The outer shell tube comprises an ammonia feedstock stream tube entry 10, the tube entry 10 being configured to let the ammonia feedstock stream enter in the outer shell tube 4, and more precisely in the reaction chamber A.

The reaction chamber A comprises a layer of an active solid catalyst 5, here a dumped bed of an active catalyst, said catalyst being configured to promote the catalytic conversion of ammonia into a synthesis gas product comprising hydrogen, here a cracking reaction, at a temperature comprised between 600°C and 900°C, preferably between 700°C and 800°C at a pressure of around 25 barA. The catalyst layer is for example a catalyst comprising nickel. The ammonia feedstock stream circulates in the active catalyst layer 5 where the cracking reaction occurs. This reaction is possible at a high temperature, so heat 7, 6 is provided to the reaction chamber A.

The outer shell tube 4, and more precisely the reaction chamber A, comprises here a heat exchanger 8, said heat exchanger 8 being arranged inside the reaction chamber A so as to be in a heat exchange relationship with the catalyst layer 5 and the ammonia feedstock stream. In this embodiment, the heat exchanger 8 comprises a single synthesis gas product circulation duct, here a tube, made of a thermal conductive material, such as a metal alloy, for example alloy 600. In another embodiment not shown here, the heat exchanger comprises at least two tubes made of said thermal conductive material. The reactor 9 is configured to, after entry into the reaction chamber A by the entry 1, make the ammonia feedstock stream flow through the catalyst layer 5 for the cracking reaction of at least part of the feedstock stream into a synthesis gas product in the catalyst layer 5, and make the synthesis gas product flow through the circulation duct comprised in the heat exchanger 8, said heat exchanger 8 being arranged inside the reaction chamber A.

The catalyst layer 5 is configured to be partially heated by an external heat 7 from an external heat source. The external heat source is for example an external firing or electrical heating. The ammonia feedstock stream is thus converted into a gas synthesis product comprising hydrogen. The ammonia feedstock is heated and said heat is provided to the cracking reaction. Then, the already cracked gas is further heated. When the hot gas synthesis product flows through the synthesis gas product circulation duct of the heat exchanger 8, it transfers internally its heat 6 to the catalyst layer 5. Hence, the catalyst layer is heated by an external heat source 7, and by an internal heat source 6. The consumption of external heat 7 is thus reduced. In a preferred embodiment, the synthesis gas product flows through the heat exchanger 8 in a countercurrent.

The shell tube comprises an outlet for the synthesis gas product 3 arranged to release the synthesis gas product from the reactor.

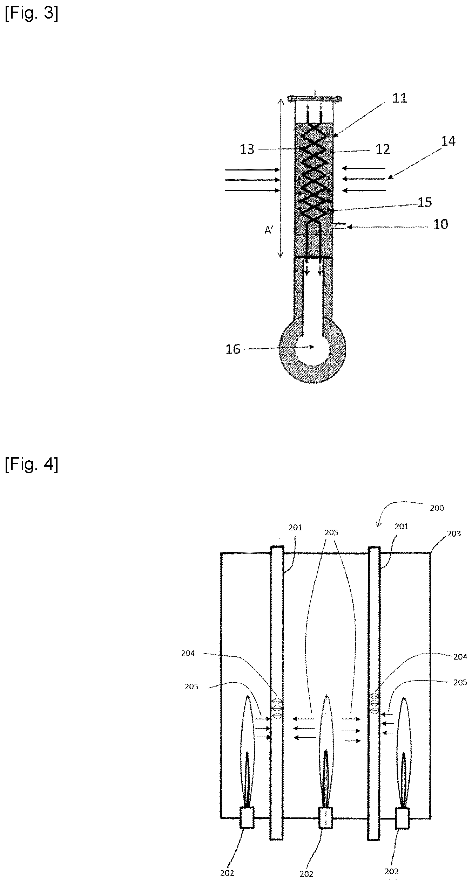

Figure 3 is a schematic representation of a reactor for producing a synthesis gas comprising hydrogen from an ammonia feedstock stream according to a second embodiment.

In this embodiment, the reactor 14 comprises an outer shell tube 11 comprising a reaction chamber A', said reaction chamber being configured to be heated. The reactor comprises an active catalyst layer 12 arranged in the reaction chamber A'. The catalyst layer 12 is arranged to promote a cracking reaction of an ammonia feedstock stream into a synthesis gas product. The ammonia feedstock stream circulates in the catalyst layer 12 which promotes the cracking reaction at a temperature comprised between 600°C and 900°C at a pressure of 25 barA. The catalyst comprises here nickel as a catalytically active material.

The reactor 14 comprises a heat exchanger 13 arranged for performing heat exchanges between the synthesis gas product and the cracking reaction in the reaction chamber A'. Here, the heat exchanger 13 comprises two heat exchange coils 16, 17, said exchange coils 16, 17 being interlaced.

As in figure 2, the catalyst layer 12 is configured to be partially heated by an external heat 14 from an external heat source. The external heat source is for example an external firing or electrical heating. The ammonia feedstock stream is thus converted into a gas synthesis product comprising hydrogen. The ammonia feedstock is heated and said heat is provided to the cracking reaction by a heat exchanger inlet. Then, the already cracked gas is further heated. When the hot gas synthesis product flows through the synthesis gas product circulation duct of the heat exchanger 13, it transfers internally its heat 15 to the catalyst layer 12. Hence, the catalyst layer is heated by an external heat source 14, and by an internal heat source 15. The consumption of external heat 15 is thus reduced. In a preferred embodiment, the synthesis gas product flows through the heat exchanger 13 in a countercurrent.

The reactors of figure 2 and 3 can be used for cracking reaction of an ammonia feedstock stream.

Figure 4 is a schematic representation of a furnace for cracking ammonia comprising a plurality of reactors 201 as disclosed in figures 2 and 3 in a firing chamber 203. The furnace 200 comprises a plurality of burners 202 which are configured to generate flames and heat the reactors 201. In this embodiment, the reactors are fluidically arranged parallel to each other.

## Claims

1. A process (100) for producing a synthesis gas product comprising hydrogen from an endothermic cracking reaction of an ammonia feedstock stream, comprising the following steps:
- Providing (101) an ammonia feedstock stream,
- Performing a catalytic conversion (103) by catalytically converting the ammonia feedstock stream by cracking endothermically said ammonia feedstock stream into a synthesis gas product comprising hydrogen,
- Performing a heat exchanges step by performing heat exchanges between the synthesis gas product and the catalytic conversion of the ammonia feedstock stream, said heat exchanges step comprising the following steps:
∘ Discharging (109) the synthesis gas product in a synthesis gas product circulation duct, said duct being arranged for the heat exchanges between the discharged synthesis gas product and the catalytic conversion of the ammonia feedstock stream,
∘ Recovering heat (104) from the discharged synthesis gas product,
∘ Directing the recovered heat to the catalytic conversion of the ammonia feedstock stream.

2. A process (100) according to the previous claim, wherein the catalytic conversion (103) is performed at a temperature comprised between 600°C and 900°C, preferably between 700°C and 800°C.

3. A process (100) according to any of claims 1 or 2, wherein the catalytic conversion (103) is at least partially heated by an external heat source, for example heat from an external firing due to a combustion reaction.

4. A process (100) according to any of claims 1 to 3, wherein the discharged synthesis gas product circulates through the synthesis gas product circulation duct which is comprised in a heat exchanger arranged inside the reaction chamber.

5. A reactor (9, 14) for producing a synthesis gas product comprising hydrogen from an ammonia feedstock stream, the reactor comprising:
- An outer shell tube (4, 11), comprising a reaction chamber (A, A'), said reaction chamber (A, A') being configured to be heated,
- An active catalyst layer (5, 12) arranged in the reaction chamber (A, A'),
- An entry for the ammonia feedstock stream arranged in the reaction chamber, the entry for the ammonia feedstock stream being in fluid connection with the reaction chamber,
- At least one heat exchanger (8, 13) arranged in a heat exchange relationship with the reaction chamber.

6. A reactor (9, 14) according to claim 5, wherein the heat exchanger (8, 13) is arranged inside the reaction chamber (A, A'), wherein the reactor (9, 14) is configured to, after entry of the ammonia feedstock stream into the reaction chamber, make the ammonia feedstock stream flow through the catalyst layer (5, 12) for a catalytic conversion of at least part of the feedstock stream into a synthesis gas product in the catalyst layer (5, 12), and make the synthesis gas product flow through the heat exchanger (8, 13), said heat exchanger being arranged inside the reaction chamber (A, A') to be in a heat exchange relationship with the catalyst layer (5, 12) and the ammonia feedstock stream.

7. A reactor (9, 14) according to any of claims 5 or 6, wherein the reactor is configured to make the ammonia feedstock stream circulate through the catalyst layer (5, 12) and make the synthesis gas product flow through the heat exchanger (8, 13) in countercurrent.

8. A reactor (9, 14) according to any of claims 5 to 7, wherein the outer shell tube (4, 11) comprises a tube entry for the ammonia feedstock stream, said tube entry being configured to let ammonia feedstock stream enter in the outer shell tube (4, 11).

9. A reactor (9, 14) according to any of claims 5 to 8, wherein the heat exchanger (8, 13) comprises at least one synthesis gas product circulation duct arranged for discharging the synthesis gas product, said synthesis gas product circulation duct comprising a wall arranged for heat exchanges between the synthesis gas product and the reaction chamber.

10. A reactor (9, 14) according to any of claims 5 to 9, wherein the heat exchanger (8, 13) comprises at least one inlet, configured to provide the synthesis gas product into said heat exchanger (8, 13) after the catalytic conversion of the ammonia feedstock stream.

11. A reactor (9, 14) according to any of claims 5 to 10, wherein the heat exchanger (8, 13) comprises at least one outlet, said outlet being configured to discharge the synthesis gas product from the heat exchanger (8, 13).

12. Use of a reactor according to any of claims 5 to 11, in an endothermic reaction of ammonia cracking.
